# FASCICULE DE BREVET EUROPEEN

(11) **EP 1 499 128 B1**
(45) Date de publication et mention de la délivrance du brevet: **24.02.2010**
(21) Numéro de dépôt: 04364038.2
(22) Date de dépôt: 25.05.2004
(51) Int. Cl.: H04N 7/173

(54) **Procédé de chargement d'un contenu multimédia distant mettant en oeuvre une temporisation, terminal multimédia et serveur correspondants**
Verfahren, Terminal und Server zum verzögerten Herunterladen eines Multimedia-Inhalts
Method for loading a distant multimedia content with a temporisation, corresponding terminal and server

(30) Priorité: 26.05.2003 FR 0306384
(43) Date de publication de la demande: 19.01.2005
(73) Titulaire: FRANCE TELECOM, 75015 Paris (FR)
(72) Inventeur: Pondaven, Véronique, 35410 Chateaugiron (FR); Cutullic, Christophe, 35410 Domloup (FR); Decerf, Erich, 35300 Fougères (FR)
(74) Mandataire: Bioret, Ludovic

(56) Documents cités:
- EP-A- 0 653 886
- EP-A- 0 696 872
- WO-A1-99/12109
- US-A- 5 657 072
- US-A- 5 907 323
- US-B1- 6 453 471

## Description

Le domaine de l'invention est celui du chargement de fichiers, ou de contenus multimédia, stockés dans des serveurs distants, notamment pour des terminaux multimédia disposant d'une interface machine réduite.

Par contenu multimédia, on entend ici notamment les contenus audiovisuels, ou vidéo, les contenus audio, les scènes graphiques, et plus généralement tous les contenus numériques. L'invention s'applique en particulier au chargement de tels contenus volumineux, et par exemple diffusés en « streaming » (chargement d'un fichier à la volée, au fur et à mesure de sa restitution sur le terminal).

Un domaine particulier de l'invention est celui du chargement de contenus vidéo, par exemple en format MPEG-2 ou MPEG-4, dans le cadre de système de télévision interactive.

Le terminal multimédia (ou « set top box » en anglais) est alors généralement contrôlé par une télécommande, présentant un nombre réduit de boutons, qui peuvent être affectés sélectivement à plusieurs actions.

Dans le cadre de la télévision interactive, il est prévu de permettre à l'utilisateur de choisir une vidéo, par exemple un film, parmi plusieurs titres disponibles. L'utilisateur pourra, généralement moyennant finance, demander la réception de la vidéo qui l'intéresse qu'il recevra alors en « streaming », par exemple sur un réseau IP.

Pour cela, l'utilisateur doit pouvoir disposer sur son écran d'une liste de titres de vidéo accessibles. La télécommande lui permet alors de faire son choix.

Un exemple de système de ce type est présenté dans le document EP-0 946 060.

De façon à aider l'utilisateur dans son choix, il est souhaitable de lui fournir des informations générales sur chaque vidéo (par exemple un titre, un réalisateur, des noms d'acteurs... et avantageusement une image, telle que l'affiche du film). Il est également souhaitable que l'utilisateur puisse visualiser une bande-annonce avant de procéder à l'achat d'un film. Dans le cas de contenus audio, le besoin est le même, la bande-annonce pouvant être remplacée par exemple par le début de l'oeuvre musicale.

Cela suppose cependant des manipulations relativement complexes, ou à tout le moins peu ergonomiques, notamment à partir d'une simple télécommande. Il faut en effet tout d'abord sélectionner un titre, dans la liste affichée, puis demander le chargement de la bande-annonce, avec un jeu de touches limité. Une autre commande doit en outre être proposée pour permettre le chargement direct du film, si l'utilisateur ne souhaite pas voir la bande-annonce.

Il est d'une façon générale souhaitable de simplifier les manipulations que doivent faire les utilisateurs, qui n'ont pas toujours une grande aisance de manipulation des télécommandes, ou qui ont du mal à mémoriser les séquences de commande permettant d'obtenir le résultat souhaité. Plus généralement, il est bien sûr souhaitable que les opérations possibles puissent s'effectuer de la façon la plus simple et la plus ergonomique possible.

De ce fait, les inventeurs de la présente demande de brevet ont tout d'abord envisagé une solution plus simple consistant à télécharger directement la bande-annonce, sans qu'aucune action particulière ne soit requise sur la télécommande, dès qu'un curseur, ou un élément correspondant de sélection, est placé sur le titre correspondant.

Une telle approche est décrite dans le document US-5 907 323.

On réduit ainsi fortement les manipulations nécessaires, et le système fonctionne de façon intuitive et simplifiée. Cependant, cette approche n'apparaît pas satisfaisante en pratique, notamment du fait qu'elle entraîne les encombrements inutiles des lignes de transmission des données, et donc une perte de bande passante. En effet, des bandes-annonces non réellement souhaitées seront transmises, simplement parce que l'utilisateur est passé sur le titre correspondant.

Dans le cas où l'utilisateur fait défiler plusieurs titres, on aura alors le téléchargement d'une pluralité de bandes-annonces, qui vont encombrer inutilement, non seulement les moyens de transmission, mais également le terminal. Ce dernier sera alors ralenti, voire bloqué.

L'invention a notamment pour objectif de pallier ces différents inconvénients de l'état de l'art.

Plus précisément, l'invention a pour objectif de fournir une technique de chargement de contenus multimédia distant, notamment dans un terminal multimédia piloté par une interface homme machine réduite, qui soit ergonomique, et intuitive pour tous les utilisateurs, même lorsque ceux-ci disposent uniquement d'une interface réduite.

Un autre objectif de l'invention est de fournir une telle technique, qui ne nécessite pas de moyens complexes dans les terminaux ou dans les serveurs.

L'invention a également pour objectif de fournir une telle technique, qui permette d'optimiser l'utilisation de la bande passante, en particulier en évitant la transmission de bande-annonce ou de contenu correspondant non souhaité par un utilisateur.

Ces objectifs, ainsi que d'autres qui apparaîtront par la suite, sont atteints selon l'invention à l'aide d'un procédé de chargement (et généralement de restitution) dans un terminal d'un contenu multimédia distant, stocké dans au moins un serveur distant, met en oeuvre une étape de temporisation, activant le chargement dudit contenu multimédia après l'écoulement d'au moins un délai prédéterminé, si aucune action parmi un ensemble d'actions possibles n'a été effectuée par un utilisateur dudit terminal.

Ainsi, il est possible d'obtenir la restitution du contenu (par exemple la visualisation d'une bande annonce) sans aucune manipulation. L'utilisateur n'a pas besoin de mémoriser une séquence de touches, ni de l'effectuer sur sa télécommande. La temporisation permet d'optimiser l'utilisation de la bande passante, une bande annonce (ou un autre contenu) n'étant pas chargée si celle-ci n'est pas réellement souhaitée (c'est-à-dire si l'utilisateur à attendu un laps de temps prédéterminé, sans passer à un autre titre de la liste).

Avantageusement, le procédé comprend les étapes suivantes :
- visualisation d'une liste de titres d'oeuvres multimédia disponibles ;
- sélection par ledit utilisateur d'un desdits titres ;
- chargement immédiat d'informations représentatives de l'oeuvre multimédia correspondant au titre sélectionné ;
- activation immédiate d'une temporisation ;
- si une action appartenant audit ensemble d'actions possibles est effectuée, interruption de ladite temporisation ;
- lorsque ledit délai est écoulé, chargement d'un contenu multimédia représentatif de l'oeuvre correspondant audit titre sélectionné.

Le terme « oeuvre » doit ici être pris dans un sens très général, représentant un ensemble, ou un contenu (vidéo, audio, scène graphique, message...) et non uniquement dans le sens restreint d'oeuvre artistique.

Selon un mode de réalisation préférentiel, le chargement dudit contenu multimédia est activé par ledit terminal, dès que ledit délai est écoulé.

En d'autres termes, c'est le terminal qui gère la temporisation. Selon une autre approche, celle-ci peut être gérée par le serveur.

De façon avantageuse, le procédé de l'invention comprend une étape de visualisation dudit contenu multimédia dès qu'une partie suffisante a été reçue, ledit chargement étant effectué à la volée, au fur et à mesure de la visualisation.

Le contenu multimédia est donc reçu en « streaming », et n'est pas nécessairement stocké dans le terminal (bien que cela reste possible). Le début de la visualisation démarre ainsi rapidement, après la fin de la temporisation.

De façon préférentielle, ledit chargement et/ou la visualisation correspondante est interrompu(e) en cours, dès qu'une action parmi un ensemble d'actions possibles est effectuée.

Cela permet à nouveau d'optimiser l'utilisation de la bande passante.

Selon un premier mode de réalisation avantageux, ledit ensemble d'actions possibles comprend un appui sur l'une quelconque des touches d'un clavier et/ou d'une télécommande.

Par exemple, la temporisation est interrompue dès que l'utilisateur agit sur l'une des touches de sa télécommande.

Selon un second mode de réalisation avantageux, ledit ensemble d'actions n'inclut pas un appui sur au moins une touche particulière d'un clavier et/ou d'une télécommande.

Par exemple, l'appui sur une touche d'aide peut ne pas interrompre la temporisation.

On peut également avantageusement prévoir que le procédé comprend une étape de suspension de ladite temporisation, lorsqu'au moins une action spécifique est effectuée.

A nouveau, cela peut être par exemple la cas de la touche d'aide.

Dans l'exemple du chargement de bande-annonces, le délai sera de quelques secondes (par exemple 5 s), et cette nuance peut être de faible intérêt. Dans d'autres applications cependant, on peut prévoir des délais plus longs (par exemples 10 à 20 secondes), qui justifient de distinguer la suspension du délai et sa remise à zéro.

Selon un mode de réalisation préférentiel de l'invention, le procédé utilise des pages dynamiques (par exemple au format html/javascript).

Dans une mise en oeuvre avantageuse, le procédé de l'invention comprend les étapes suivantes :
- chargement d'une première page dynamique, comprenant lesdites informations représentatives de l'oeuvre multimédia correspondant au titre sélectionné et une temporisation ;
- remplacement de ladite première page dynamique, lorsque ladite temporisation est écoulée, par une deuxième page dynamique comprenant ledit contenu multimédia représentatif de l'oeuvre et des moyens permettant la visualisation et/ou l'audition dudit contenu ;
- remplacement de ladite seconde page dynamique, lorsque la restitution dudit contenu est terminée, par une troisième page dynamique similaire à ladite première page dynamique, mais ne comprenant pas de temporisation.

On obtient ainsi une présentation ergonomique à l'écran, et une mise en oeuvre simple et efficace.

Dans ce cas, lesdites première et troisième pages sont avantageusement identiques, avec un paramètre configurable permettant d'activer ou non ladite temporisation.

Préférentiellement, ladite première page comprend des moyens d'appel de ladite seconde page, et en ce que ladite seconde page comprend des moyens d'appel de ladite troisième page.

Selon une caractéristique avantageuse de l'invention, on associe un identifiant unique à chaque ensemble d'objets comprenant ledit titre d'une oeuvre multimédia, lesdites informations représentatives de l'oeuvre multimédia, ledit contenu multimédia représentatif de l'oeuvre multimédia et ladite oeuvre multimédia.

En complément, le procédé comprend préférentiellement une étape de chargement de ladite oeuvre multimédia.

Il peut ainsi s'agir d'un film, correspondant à la bande-annonce visualisée précédemment. Généralement, cette opération sera payante, sous une forme appropriée (éventuellement avec des tarifs distincts selon que l'on veut simplement voir (« streaming ») ou également stocker le film.

Selon différentes applications, lesdites oeuvres multimédia peuvent notamment appartenir au groupe comprenant :
- des vidéos ;
- des séquences audios ;
- des messages.

Bien sûr, une même application peut permettre l'accès à plusieurs types d'oeuvres, selon le sens large rappelé plus haut.

L'invention concerne également les terminaux multimédia mettant en oeuvre un procédé tel que décrit ci-dessus.

Selon un mode de réalisation particulier, ce terminal (qui peut être par exemple une « set top box », selon le terme anglais usuel) est contrôlé à l'aide d'une télécommande.

L'invention concerne également les serveurs mettant en oeuvre un procédé tel que décrit ci-dessus.

Avantageusement, ledit serveur met en oeuvre des moyens de temporisation, activant le chargement dudit contenu multimédia après l'écoulement d'au moins un délai prédéterminé, si aucune action parmi un ensemble d'actions possibles n'a été effectuée par un utilisateur dudit terminal.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 est un exemple d'écran que l'utilisateur peut obtenir, pour sélectionner une vidéo selon l'invention ;
- la figure 2 présente de façon simplifiée les différents flux mis en oeuvre entre les modules fonctionnels appliqués dans le cadre de l'invention ;
- les figures 3 à 5 détaillent trois scenarii concernant respectivement :

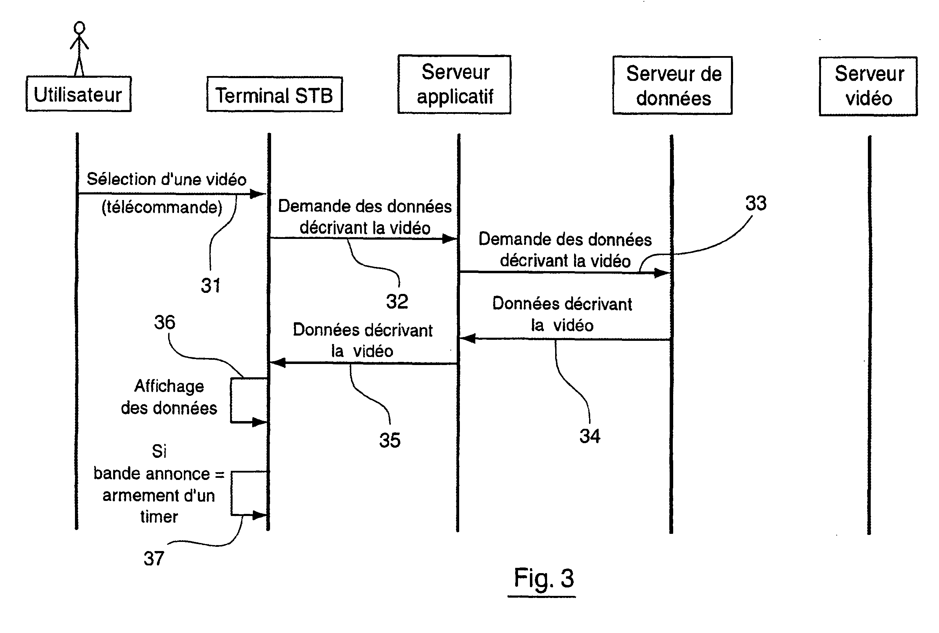

   - figure 3 : préparation du lancement d'une bande-annonce ;

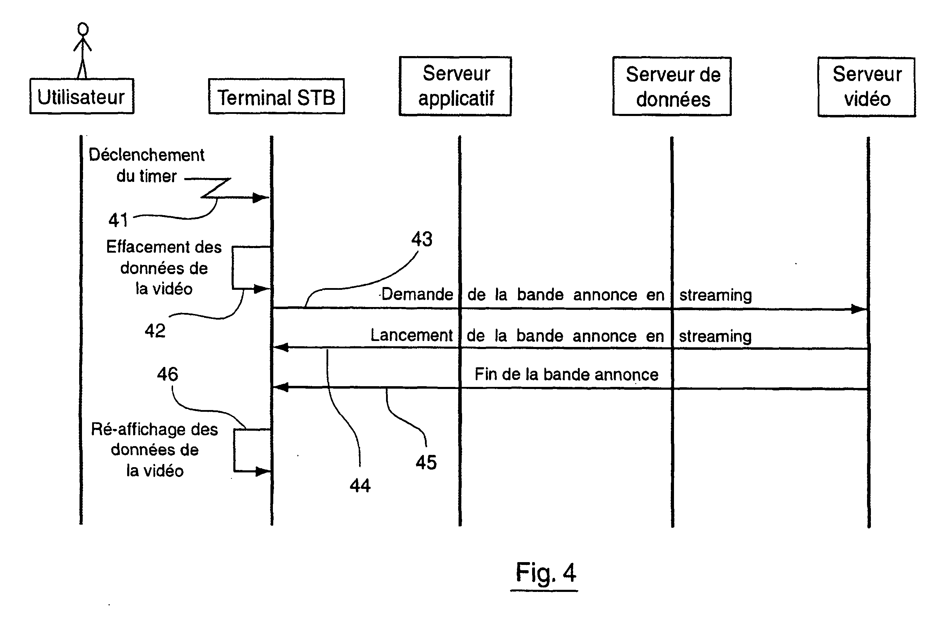

   - figure 4 : lancement automatique de la bande-annonce ;

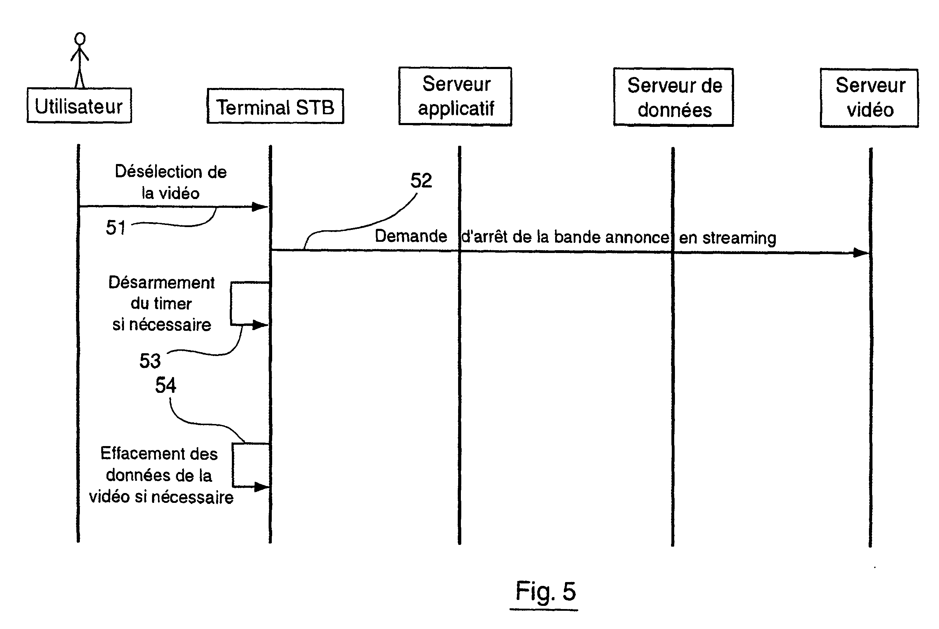

   - figure 5 : réinitialisation du lancement automatique d'une bande-annonce ;

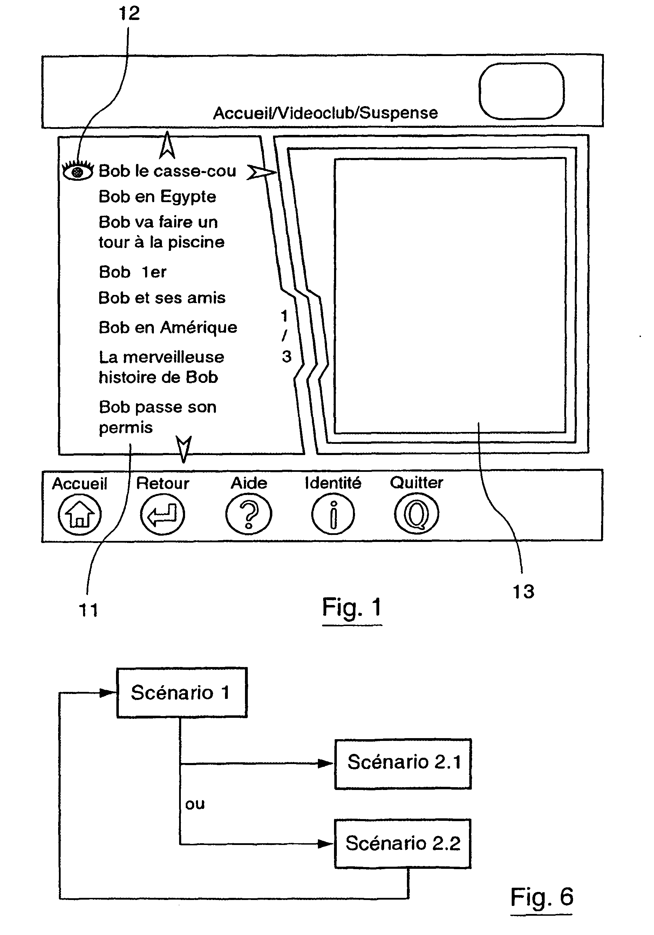

- la figure 6 présente les enchaînements possibles des scénarii des figures 3 à 5.

Comme indiqué précédemment, l'invention repose notamment sur la mise en oeuvre d'une temporisation, permettant de différer pendant un laps de temps prédéterminé le chargement d'un contenu multimédia, tel qu'une bande-annonce d'un film.

Ainsi, dans le mode de réalisation illustré par la figure 1, l'utilisateur peut visualiser, sur la partie gauche 11 de son écran, une liste de films disponibles. Il dispose classiquement sur la télécommande de flèches haut et bas, permettant de faire défiler la liste, et de se positionner sur un élément de la liste. Ce positionnement est ici illustré par un oeil 12.

Dans la partie droite 13 de l'écran, l'utilisateur verra systématiquement et instantanément (ou quasi instantanément) des informations générales sur le film choisi, comme par exemple les noms des réalisateurs, des acteurs, le type du film, un résumé, et le cas échéant, une image, telle que l'affiche du film.

Selon l'invention, après écoulement d'un laps de temps prédéterminé, la bande-annonce de la vidéo sélectionnée apparaîtra dans la partie droite 13, en lieu et place des premières informations, sous réserve que l'utilisateur n'ait fait aucune autre manipulation.

A la fin de la bande-annonce, les premières informations seront à nouveau présentées.

On obtient ainsi un système particulièrement simple, puisque l'utilisateur n'a aucune manipulation à faire pour visualiser la bande-annonce, si ce n'est d'attendre un léger laps de temps, qui peut être par exemple de l'ordre de 5 secondes dans l'application proposée. Ce système est également efficace, du point de vue de la gestion de la bande passante, puisqu'il n'y a pas de transmission de bande-annonce si celle-ci n'est pas réellement souhaitée, et que l'utilisateur est passé sur un autre élément de la liste pendant ce laps de temps.

On notera ici que l'on distingue quatre éléments distincts, pour chaque vidéo :
- le titre, qui apparaît dans la liste 11 ;
- les informations générales, qui apparaissent avant et après la visualisation de la bande-annonce dans la partie gauche 13 ;
- la bande-annonce, qui est visualisée dans la partie 13 ;
- et enfin la vidéo elle-même, que l'utilisateur a décidé de visualiser, généralement moyennant un paiement, sous une forme adéquate.

Selon les applications, on retrouvera les mêmes quatre éléments, sous des formes éventuellement légèrement différentes.

On décrit maintenant plus en détail un mode de réalisation, correspondant à un portail de services audiovisuels proposant un catalogue de vidéos à la demande, accessible en ligne à des clients disposant de terminaux de type STB (« set top box » en anglais) connecté au réseau Internet.

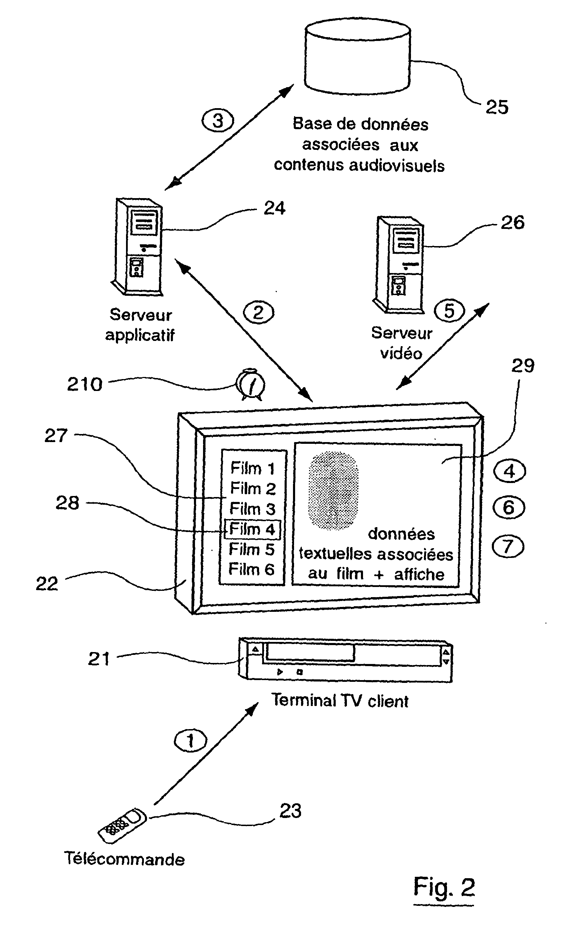

Comme illustré en figure 2, les principaux modules fonctionnels mis en oeuvre dans ce cas sont les suivants :
- le terminal du client 21 ;
- une « set top box » 21 reliée à un téléviseur 22, et contrôlée par une télécommande 23. Il intègre un contrôleur de type Internet, qui va permettre de se connecter au réseau IP, via le protocole http, de ficher les pages du service, de gérer l'interactivité locale, via la télécommande 23, de jouer les vidéos, par exemple en « streaming », et de lancer des requêtes vers le serveur applicatif 24 ;
- un serveur applicatif 24, qui héberge un portail de services, sous la forme de pages HTML/JAVASCRIPT dynamiques, et qui va également pouvoir interroger des bases de données 25 dédiées à ce portail ;
- un système de gestion de base de données, qui va contenir les données décrivant les vidéos du catalogue proposé par le portail (affiches, producteurs, réalisateurs...), géré par exemple par le serveur 24 ;
- un serveur vidéo 25, qui va contenir les vidéos du catalogue, mais également les bandes-annonces associées, et qui va fournir les fonctionnalités permettant de jouer ces vidéos.

On décrit maintenant les principaux flux mis en oeuvre entre ces modules fonctionnels. Ceux-ci sont numérotés de 1 à 7 sur le schéma :
1. L'utilisateur sélectionne un film dans la liste 27 qui lui est proposée sur l'écran du téléviseur 22. Exemple : l'utilisateur utilise les flèches haut et bas de la télécommande 23 pour naviguer dans la liste des titres des films qui sont proposés, et positionne le curseur 28 sur le film qui l'intéresse.
2. Le terminal client (« set top box ») 21 demande au serveur applicatif 24 les données décrivant le film sélectionné. Exemple : la set top box envoie une requête http au serveur avec l'identificateur unique du film sélectionné en paramètre.
3. Le serveur applicatif interroge la base de données 25 pour renvoyer les données disponibles au terminal client (ces données comprennent l'URL de la bande-annonce). Exemple : en réponse à la requête http, le serveur interroge la base de données avec l'identificateur du film comme clé de recherche, et retourne à la « set top box » 25 le nom du réalisateur du film, la liste des acteurs, le résumé, l'image de l'affiche 29... et l'URL de la bande-annonce associée sous la forme générique "//nom_serveur/chemin/nom_vidéo.extension".
4. Le terminal client 21 affiche les données à l'écran (affiche du film, producteur, acteurs, résumé...) et arme une temporisation (« timer ») 210 de n secondes pour le lancement de la bande-annonce. Exemple : la page HTML/JavaScript qui affiche les informations sur le film côté « set top box » va programmer un timer de 5 secondes destiné à déclencher une fonction de lancement d'une vidéo, avec l'URL de la bande-annonce en paramètre.
5. Lorsque le timer se déclenche, le terminal client 21 lance une requête de visualisation de la bande-annonce du film en utilisant l'URL retournée par le serveur applicatif avec les données. Exemple : la fonction de lancement de la bande-annonce va positionner les moyens de restitution (« player ») vidéo intégré au contrôleur (« browser ») de la « set top box » à la place réservée pour les données du film, et va envoyer une requête vers le serveur vidéo 26, en précisant le nom du fichier vidéo à jouer (donné par l'URL) et les paramètres de lancement (jouer immédiatement la vidéo, une seule fois).
6. La bande-annonce est jouée en « streaming » via un « player » audiovisuel positionné à la place des données du film. Exemple : le « player » vidéo intégré dans le « browser » de la « set top box » va reconnaître automatiquement le format de la vidéo qui est envoyée en streaming par le serveur vidéo (MPEG2 ou MPEG4 par exemple), et va visualiser cette vidéo jusqu'à sa fin ou jusqu'à une demande d'arrêt de la part du terminal client.
7. Dès que la bande-annonce est terminée, le « player » audiovisuel disparaît et les données du film sont à nouveau présentées. Exemple : le « browser » du terminal client 21 va détecter une fin de vidéo, et va faire disparaître le « player » vidéo et afficher à nouveau les données associées au film.

Si l'utilisateur sélectionne un autre film, le processus reprend à l'étape 1, quelle que soit l'étape en cours.

On présente maintenant le fonctionnement de l'invention, sous la forme de trois scenarii, illustrés respectivement par les figures 3 à 5. Sur ces figures, on a représenté cinq niveaux correspondant à cinq colonnes :
- l'utilisateur ;
- le terminal audiovisuel (« set top box ») ;
- le serveur applicatif ;
- le serveur de données ;
- le serveur vidéo.

Bien entendu, il s'agit essentiellement d'une décomposition logique, et il est tout à fait possible que les trois serveurs, ou au moins deux d'entre eux, soient regroupés physiquement dans une même machine.

La figure 3 est un scénario illustrant la préparation du lancement automatique d'une bande-annonce selon l'invention. Les opérations successives sont donc les suivantes :
- l'utilisateur sélectionne une vidéo (31), à l'aide de sa télécommande ;
- le terminal demande alors des données décrivant la vidéo (32) au serveur applicatif. Ces données correspondent aux informations générales sur la vidéo sélectionnée ;
- le serveur applicatif fait suivre cette demande (33) au serveur de données ;
- le serveur de données retourne (34) les données décrivant la vidéo au serveur applicatif ;
- le serveur applicatif transmet ces données (35) au terminal multimédia ;
- le terminal affiche (36) ces données sur l'écran du téléviseur ;
- si une bande-annonce existe, le terminal arme une temporisation (37).

La figure 4 présente le scénario d'un lancement automatique d'une bande-annonce lorsque la temporisation est terminée. Les opérations sont les suivantes :
- le terminal détecte la fin de la temporisation (41) ;
- le terminal efface les données de la vidéo précédemment reçue (42) ;
- le terminal demande au serveur vidéo la bande-annonce, par exemple en « streaming » (43) ;
- le serveur vidéo lance la bande-annonce (44) à destination du terminal ;
- le serveur vidéo informe (45) le terminal de la fin de la bande-annonce ;
- le terminal réaffiche (46) les informations générales de la vidéo (l'utilisateur pouvant alors décider l'achat correspondant).

Il est prévu que la visualisation de la bande-annonce soit interrompue dès que l'utilisateur effectue une opération, comme par exemple, toucher à l'une des touches de sa télécommande. Le principe correspondant est illustré en figure 5, qui présente le scénario de réinitialisation du lancement de la bande-annonce, après désélection. Les étapes sont les suivantes :
- désélection de la vidéo (51) par action de l'utilisateur sur l'une des touches de la télécommande ;
- demande d'arrêt de la bande-annonce (52) par le terminal au serveur vidéo ;
- désarmement de la temporisation dans le terminal (53) si nécessaire ;
- effacement (54) des données de la vidéo dans le terminal, si nécessaire.

La figure 6 illustre l'enchaînement de ces trois scénarios.

Au départ, lors de la sélection d'une vidéo par l'utilisateur, le scénario 1 (figure 3) est exécuté. Si l'utilisateur ne déclenche aucune interaction avant la fin de la temporisation, alors le scénario 2.1 (figure 4) est lancé, lançant la visualisation de la bande-annonce associée.

En revanche, si l'utilisateur désélectionne la vidéo courante avant la fin de la temporisation, le scénario 2.2 (figure 5) est exécuté, provoquant une remise à zéro du processus, suivie par un nouveau lancement du scénario 1.

Plusieurs variantes de l'invention peuvent être envisagées. Ainsi, on peut prévoir que les actions assurant l'interruption de la temporisation ne sont pas tous les appuis possibles sur l'une des touches de la télécommande, mais uniquement l'appui sur certaines touches. On peut ainsi prévoir que certaines touches soient inopérantes, et que d'autres n'entraînent pas une remise à zéro, mais simplement une suspension de la temporisation. Cela peut par exemple être le cas d'une touche de type « aide », qui permet à l'utilisateur de visualiser des informations d'aide. Lorsque cette visualisation est terminée, on peut prévoir que la temporisation repart à partir de l'endroit où elle était arrêtée.

On peut également prévoir que d'autres actions que celles effectuées par une télécommande agissent sur le procédé de l'invention.

La durée de la temporisation peut bien sûr être adaptée en fonction des besoins et des applications. On a ainsi indiqué que, dans l'application des bandes-annonces, cette temporisation pouvait être d'une durée de 5 secondes. Dans d'autres types d'application, on pourra le cas échéant prévoir des délais plus longs, par exemple de l'ordre de 10 ou 20 secondes. On peut également prévoir que ces délais sont modifiables, soit par l'utilisateur (au niveau du terminal), soit par le serveur (par exemple en fonction de sa charge, ou du type d'abonnement de l'utilisateur).

Dans le mode de réalisation décrit, c'est le terminal qui gère la temporisation. Il est également possible, sans sortir du cadre de l'invention, que cette temporisation soit gérée par le serveur applicatif.

## Revendications

1. Procédé de chargement dans un terminal d'un contenu multimédia distant, stocké dans au moins un serveur distant,
**caractérisé en ce qu'**il met en oeuvre les étapes suivantes :
- sélection (31), par un utilisateur, du titre d'une oeuvre multimédia ;
- activation (37) d'une temporisation permettant de différer pendant un laps de temps prédéterminé le chargement d'un contenu multimédia distant représentatif de ladite oeuvre multimédia ;
- chargement (43) dudit contenu multimédia distant, après l'écoulement dudit laps de temps prédéterminé (41), si aucune action parmi un ensemble d'actions possibles n'a été effectuée par un utilisateur dudit terminal.

2. Procédé de chargement selon la revendication 1, **caractérisé en ce qu'**il comprend :
- une étape de visualisation d'une liste de titres (11) d'oeuvres multimédia disponibles ;
- ladite étape de sélection (31) par ledit utilisateur, par sélection d'un desdits titres ;
- une étape de chargement immédiat (32) d'informations représentatives de l'oeuvre multimédia correspondant au titre sélectionné ;
- si une action (51) appartenant audit ensemble d'actions possibles est effectuée, une étape d'interruption (53) de ladite temporisation.

3. Procédé de chargement selon l'une quelconque des revendications 1 et 2, **caractérisé en ce que** le chargement (43) dudit contenu multimédia distant est activé par ledit terminal, dès que ledit délai est écoulé.

4. Procédé de chargement selon l'une quelconque des revendications 1 à 3, **caractérisé en qu'**il comprend une étape de visualisation dudit contenu multimédia distant dès qu'une partie suffisante a été reçue, ledit chargement étant effectué à la volée, au fur et à mesure de la visualisation.

5. Procédé de chargement selon l'une quelconque des revendications 1 à 4, **caractérisé en ce que** ledit chargement et/ou la visualisation correspondante est interrompu(e) (52) en cours, dès qu'une action parmi un ensemble d'actions possibles est effectuée.

6. Procédé de chargement selon l'une quelconque des revendications 1 à 5, **caractérisé en ce que** ledit ensemble d'actions possibles comprend un appui sur l'une quelconque des touches d'un clavier et/ou d'une télécommande.

7. Procédé de chargement selon l'une quelconque des revendications 1 à 5, **caractérisé en ce que** ledit ensemble d'actions n'inclut pas un appui sur au moins une touche particulière d'un clavier et/ou d'une télécommande.

8. Procédé de chargement selon l'une quelconque des revendications 1 à 7, **caractérisé en ce qu'**il comprend une étape de suspension de ladite temporisation, lorsqu'au moins une action spécifique est effectuée.

9. Procédé de chargement selon l'une quelconque des revendications 1 à 8, **caractérisé en ce qu'**il utilise des pages dynamiques.

10. Procédé de chargement selon les revendications 2 et 9, **caractérisé en ce qu'**il comprend les étapes suivantes :
- chargement d'une première page dynamique, comprenant lesdites informations représentatives de l'oeuvre multimédia correspondant au titre sélectionné et une temporisation ;
- remplacement de ladite première page dynamique, lorsque ladite temporisation est écoulée, par une deuxième page dynamique comprenant ledit contenu multimédia distant représentatif de l'oeuvre et des moyens permettant la visualisation et/ou l'audition dudit contenu ;
- remplacement de ladite seconde page dynamique, lorsque la restitution dudit contenu est terminée, par une troisième page dynamique similaire à ladite première page dynamique, mais ne comprenant pas de temporisation.

11. Procédé de chargement selon la revendication 10, **caractérisé en ce que** lesdites première et troisième pages sont identiques, avec un paramètre configurable permettant d'activer ou non ladite temporisation.

12. Procédé de chargement selon l'une quelconque des revendications 10 et 11, **caractérisé en ce que** ladite première page comprend des moyens d'appel de ladite seconde page, et **en ce que** ladite seconde page comprend des moyens d'appel de ladite troisième page.

13. Procédé de chargement selon l'une quelconque des revendications 1 à 12, **caractérisé en ce qu'**il associe un identifiant unique à chaque ensemble d'objets comprenant ledit titre d'une oeuvre multimédia, lesdites informations représentatives de l'oeuvre multimédia, ledit contenu multimédia distant représentatif de l'oeuvre multimédia et ladite oeuvre multimédia.

14. Procédé de chargement selon l'une quelconque des revendications 1 à 13, **caractérisé en ce qu'**il comprend une étape de chargement de ladite oeuvre multimédia.

15. Procédé de chargement selon l'une quelconque des revendications 1 à 14, **caractérisé en ce que** ladite oeuvre multimédia appartiennent au groupe comprenant :
- des vidéos ;
- des séquences audios ;
- des messages.

16. Terminal multimédia **caractérisé en ce qu'**il comprend des moyens de chargement d'un contenu multimédia distant, stocké dans au moins un serveur distant,
**caractérisé en ce qu'**il met en oeuvre des moyens de sélection, par un utilisateur, du titre d'une oeuvre multimédia, et des moyens de temporisation, activant le chargement (43) d'un contenu multimédia distant représentatif d'une oeuvre multimédia dont le titre a été sélectionné par un utilisateur après l'écoulement d'au moins un délai prédéterminé (41), si aucune action parmi un ensemble d'actions possibles n'a été effectuée par un utilisateur dudit terminal.

17. Terminal multimédia selon la revendication 16, **caractérisé en ce qu'**il est contrôlé à l'aide d'une télécommande.

18. Serveur distant comprenant une pluralité de contenus multimédia susceptibles d'être chargés dans un terminal multimédia,
**caractérisé en ce qu'**il met en oeuvre des moyens de sélection, par un utilisateur, du titre d'une oeuvre multimédia, et des moyens de temporisation, activant le chargement (43) d'un contenu multimédia distant représentatif d'une oeuvre multimédia dont le titre a été sélectionné par un utilisateur après l'écoulement d'au moins un délai prédéterminé, si aucune action parmi un ensemble d'actions possibles n'a été effectuée par un utilisateur dudit terminal.

## Claims

1. Method for loading into a terminal a remote multimedia content stored in at least one remote server,
**characterized in that** it uses the following steps:
- selection (31), by a user, of the title of a multimedia work;
- activation (37) of a time delay making it possible to defer for a predetermined period of time the loading of a remote multimedia content representative of the said multimedia work;
- loading (43) of the said remote multimedia content, after the lapse of the said predetermined period of time (41), if no action amongst a set of possible actions has been carried out by a user of the said terminal.

2. Loading method according to Claim 1, **characterized in that** it comprises:
- a step of viewing a list of titles (11) of available multimedia works;
- the said selection step (31) by the said user, by selection of one of the said titles;
- a step of immediate loading (32) of information representative of the multimedia work corresponding to the selected title;
- if an action (51) belonging to the said set of possible actions is carried out, a step of interrupting (53) the said time delay.

3. Loading method according to either one of Claims 1 and 2, **characterized in that** the loading (43) of the said remote multimedia content is activated by the said terminal as soon as the said time has elapsed.

4. Loading method according to any one of Claims 1 to 3, **characterized in that** it comprises a step of viewing the said remote multimedia content as soon as a sufficient portion has been received, the said loading being carried out on the fly, as the viewing takes place.

5. Loading method according to any one of Claims 1 to 4, **characterized in that** the said loading and/or the corresponding viewing is interrupted (52) in progress, as soon as an action amongst a set of possible actions is carried out.

6. Loading method according to any one of Claims 1 to 5, **characterized in that** the said set of possible actions comprises pressing any one of the keys of a keyboard and/or of a remote control.

7. Loading method according to any one of Claims 1 to 5, **characterized in that** the said set of actions does not include pressing on at least one particular key of a keyboard and/or of a remote control.

8. Loading method according to any one of Claims 1 to 7, **characterized in that** it comprises a step of suspending the said time delay, when at least one specific action is carried out.

9. Loading method according to any one of Claims 1 to 8, **characterized in that** it uses dynamic pages.

10. Loading method according to Claims 2 and 9, **characterized in that** it comprises the following steps:
- loading a first dynamic page, comprising the said information representative of the multimedia work corresponding to the selected title and a time delay;
- replacement of the said first dynamic page, when the said time delay has elapsed, with a second dynamic page comprising the said remote multimedia content representative of the work and of the means allowing the viewing and/or the hearing of the said content;
- replacement of the said second dynamic page, when the retrieval of the said content is finished, with a third dynamic page similar to the said first dynamic page, but comprising no time delay.

11. Loading method according to Claim 10, **characterized in that** the said first and third pages are identical, with a configurable parameter allowing the activation or nonactivation of the said time delay.

12. Loading method according to either one of Claims 10 and 11, **characterized in that** the said first page comprises means for calling up the said second page, and **in that** the said second page comprises means for calling up the said third page.

13. Loading method according to any one of Claims 1 to 12, **characterized in that** it associates a unique identifier with each set of objects comprising the said title of a multimedia work, the said information representative of the multimedia work, the said remote multimedia content representative of the multimedia work and the said multimedia work.

14. Loading method according to any one of Claims 1 to 13, **characterized in that** it comprises a step of loading the said multimedia work.

15. Loading method according to any one of Claims 1 to 14, **characterized in that** the said multimedia work belongs to the group comprising:
- videos;
- audio sequences;
- messages.

16. Multimedia terminal **characterized in that** it comprises means for loading a remote multimedia content stored in at least one remote server,
**characterized in that** it uses means for selection, by a user, of the title of a multimedia work, and time-delay means activating the loading (43) of a remote multimedia content representative of a multimedia work, the title of which has been selected by a user, after the lapse of at least a predetermined period of time (41), if no action amongst a set of possible actions has been carried out by a user of the said terminal.

17. Multimedia terminal according to Claim 16, **characterized in that** it is controlled with the aid of a remote control.

18. Remote server comprising a plurality of multimedia contents capable of being loaded into a multimedia terminal,
**characterized in that** it uses means for selection, by a user, of the title of a multimedia work, and time-delay means, activating the loading (43) of a remote multimedia content representative of a multimedia work, the title of which has been selected by a user, after the lapse of at least a predetermined period of time, if no action amongst a set of possible actions has been carried out by a user of the said terminal.

## Patentansprüche

1. Verfahren zum Herunterladen eines in mindestens einem fernen Server gespeicherten fernen Multimediainhalts in ein Endgerät,
**dadurch gekennzeichnet, dass** es die folgenden Schritt durchführt:
- Auswahl (31) des Titels eines Multimediawerks durch einen Benutzer;
- Aktivierung (37) einer Verzögerung, die es ermöglicht, während eines vorbestimmten Zeitraums das Herunterladen eines für das Multimediawerk repräsentativen fernen Multimediainhalts zu verzögern;
- Herunterladen (43) des fernen Multimediainhalts nach dem Ablauf des vorbestimmten Zeitraums (41), wenn keine Aktion aus einer Gruppe von möglichen Aktionen von einem Benutzer des Endgeräts durchgeführt wurde.

2. **Ladeverfahren nach Anspruch 1, dadurch gekennzeichnet, dass** es enthält:
- einen Schritt der Sichtbarmachung einer Liste von Titeln (11) von verfügbaren Multimediawerken;
- den Schritt der Auswahl (31) durch den Benutzer durch Auswahl eines der Titel;
- eine Schritt des sofortigen Herunterladens (32) von Informationen, die für das Multimediawerk repräsentativ sind, das dem ausgewählten Titel entspricht;
- wenn eine zu der Gruppe von möglichen Aktionen gehörende Aktion (51) durchgeführt wird, einen Schritt der Unterbrechung (53) der Verzögerung.

3. Ladeverfahren nach einem der Ansprüche 1 und 2, **dadurch gekennzeichnet, dass** das Herunterladen (43) des fernen Multimediainhalts vom Endgerät aktiviert wird, sobald die Frist abgelaufen ist.

4. Ladeverfahren nach einem der Ansprüche 1 bis 3, **dadurch gekennzeichnet, dass** es einen Schritt der Sichtbarmachung des fernen Multimediainhalts enthält, sobald ein ausreichender Teil empfangen wurde, wobei das Herunterladen im Verlauf der Sichtbarmachung nach und nach durchgeführt wird.

5. Ladeverfahren nach einem der Ansprüche 1 bis 4, **dadurch gekennzeichnet, dass** das Herunterladen und/oder die entsprechenden Sichtbarmachung während seines (ihres) Ablaufs unterbrochen wird (52), sobald eine Aktion aus einer Gruppe von möglichen Aktionen durchgeführt wird.

6. Ladeverfahren nach einem der Ansprüche 1 bis 5, **dadurch gekennzeichnet, dass** die Gruppe von möglichen Aktionen ein Drücken auf eine beliebige Taste einer Tastatur und/oder einer Fernbedienung enthält.

7. Ladeverfahren nach einem der Ansprüche 1 bis 5, **dadurch gekennzeichnet, dass** die Gruppe von Aktionen kein Drücken auf mindestens eine besondere Taste einer Tastatur und/oder einer Fernbedienung umfasst.

8. Ladeverfahren nach einem der Ansprüche 1 bis 7, **dadurch gekennzeichnet, dass** es einen Schritt des Aussetzens der Verzögerung enthält, wenn mindestens eine spezifische Aktion durchgeführt wird.

9. Ladeverfahren nach einem der Ansprüche 1 bis 8, **dadurch gekennzeichnet, dass** es dynamische Seiten verwendet.

10. Ladeverfahren nach den Ansprüchen 2 und 9, **dadurch gekennzeichnet, dass** es die folgenden Schritte enthält:
- Herunterladen einer ersten dynamischen Seite, die die für das dem ausgewählten Titel entsprechende Multimediawerk repräsentativen Informationen und eine Verzögerung enthält;
- Ersetzen der ersten dynamischen Seite, wenn die Verzögerung abgelaufen ist, durch eine zweite dynamische Seite, die den für das Werk repräsentativen fernen Multimediainhalt und Mittel enthält, die die Sichtbarmachung und/oder das Hören des Inhalts erlauben;
- Ersetzen der zweiten dynamischen Seite, wenn die Wiederherstellung des Inhalts beendet ist, durch eine dritte dynamische Seite gleich der ersten dynamischen Seite, die aber keine Verzögerung enthält.

11. Ladeverfahren nach Anspruch 10, **dadurch gekennzeichnet, dass** die erste und die dritte Seite gleich sind, mit einem konfigurierbaren Parameter, der es ermöglicht, die Verzögerung zu aktivieren oder nicht.

12. Ladeverfahren nach einem der Ansprüche 10 und 11, **dadurch gekennzeichnet, dass** die erste Seite Mittel zum Aufrufen der zweiten Seite enthält, und dass die zweite Seite Mittel zum Aufrufen der dritten Seite enthält.

13. Ladeverfahren nach einem der Ansprüche 1 bis 12, **dadurch gekennzeichnet, dass** es jeder Gruppe von Objekten, die den Titel eines Multimediawerks, die **für das** Multimediawerk repräsentativen Informationen, den für das Multimediawerk repräsentativen fernen Multimediainhalt und das Multimediawerk enthalten, eine einzige Kennung zuordnet.

14. Ladeverfahren nach einem der Ansprüche 1 bis 13, **dadurch gekennzeichnet, dass** es einen Schritt des Herunterladens des Multimediawerks enthält.

15. Ladeverfahren nach einem der Ansprüche 1 bis 14, **dadurch gekennzeichnet, dass** das Multimediawerk zu der Gruppe gehört, die enthält:
- Videos;
- Audiosequenzen;
- Mitteilungen.

16. Multimedia-Endgerät, **dadurch gekennzeichnet, dass** es Mittel zum Herunterladen eines fernen Multimediainhalts enthält, der in mindestens einem fernen Server gespeichert ist,
**dadurch gekennzeichnet, dass** es Mittel zur Auswahl des Titels eines Multimediawerks durch einen Benutzer und Verzögerungsmittel anwendet, die das Herunterladen (43) eines fernen Multimediainhalts, der für ein Multimediawerk repräsentativ ist, dessen Titel von einem Benutzer ausgewählt wurde, nach Ablauf mindestens einer vorbestimmten Frist (41) aktivieren, wenn keine Aktion aus einer Gruppe von möglichen Aktionen von einem Benutzer des Endgeräts durchgeführt wurde.

17. Multimedia-Endgerät nach Anspruch 16, **dadurch gekennzeichnet, dass** es mit Hilfe einer Fernbedienung gesteuert wird.

18. **Ferner Server, der eine Vielzahl** Multimediainhalten enthält, die in ein Multimedia-Endgerät heruntergeladen werden können, **dadurch gekennzeichnet, dass** er Mittel zur Auswahl des Titels eines Multimediawerks durch einen Benutzer und Verzögerungsmittel anwendet, die das Herunterladen (43) eines fernen Multimediainhalts, der für ein Multimediawerk repräsentativ ist, dessen Titel von einem Benutzer ausgewählt wurde, nach Ablauf mindestens einer vorbestimmten Frist aktivieren, wenn keine Aktion aus einer Gruppe von möglichen Aktionen von einem Benutzer des Endgeräts durchgeführt wurde.
